## Europäisches Patentamt
## European Patent Office
## Office européen des brevets

(19)

(11) Publication number: **0 015 129**
**B1**

(12) **EUROPEAN PATENT SPECIFICATION**

(45) Date of publication of patent specification: **11.05.83**

(51) Int. Cl.³: **G 02 F 1/09** //G02B5/30

(21) Application number: **80300455.5**

(22) Date of filing: **15.02.80**

(54) Optical circulator.

(30) Priority: **21.02.79 JP 20175/79**

(43) Date of publication of application:
**03.09.80 Bulletin 80/18**

(45) Publication of the grant of the patent:
**11.05.83 Bulletin 83/19**

(84) Designated Contracting States:
**DE FR GB IT**

(56) References cited:
**US - A - 3 267 804**
**US - A - 3 401 590**
**US - A - 4 178 073**

**IEEE TRANSACTIONS ON MICROWAVE THEORY AND TECHNIQUES, vol. MTT-23, no. 1, January 1975**
**New York, US**
**J. WARNER "Nonreciprocal Magnetooptic Waveguides". pages 70—78.**

(73) Proprietor: **FUJITSU LIMITED**
**1015, Kamikodanaka Nakahara-ku Kawasaki-shi Kanagawa 211 (JP)**

(72) Inventor: **Kuwahara, Hideo**
**3-5-118, Miyazakidai 1-chome Takatsu-ku, Kawasaki-shi Kanagawa 213 (JP)**

(74) Representative: **Allman, Peter John et al, Marks and Clerk Scottish Life House Bridge Street Manchester M3 3DP (GB)**

(56) References cited:
**PROCEEDINGS OF THE IEEE, vol. 52, no. 8, August 1964.**
**NEW YORK, US**
**S. SAITO et al. "A Light Circulator Using the Faraday Effect of Heavy Flint Glass", page 979.**

**APPLIED OPTICS, vol. 19, no. 1, January 1980, New York, US**
**T. MATSUMOTO et al. "Polarization independent optical circulator: an experiment", pages 108—112.**

Courier Press, Leamington Spa, England

## Optical circulator

The present invention relates to an optical circulator and, more specifically, to an optical circulator which is suited for optical-fiber communications.

A circulator has generally been employed in communication systems using electromagnetic waves, and it has been desired to employ an optical circulator also in communication systems using optical fibers. In communication systems using optical fibers, however, the plane of polarization is disturbed when the light propagates through the optical fibers, making it difficult to maintain a predetermined plane of polarization. The circulator for electromagnetic waves has been designed based upon a prerequisite that the plane of polarization of electromagnetic waves is maintained constant. The optical circulator, however, cannot be formed with a construction similar to that of the circulator for electromagnetic waves.

An object of the present invention is to provide an optical circulator which is suitable for communication systems using optical fibers, and which is not affected by the state of polarization of the incident light.

According to the present invention, there is provided an optical circulator comprising:

a first polarizing element and a second polarizing element having different outlet ports for outgoing linearly polarized lightbeams with polarization directions perpendicular to each other;

a first mirror and a second mirror which form a first optical path and a second optical path between said first polarizing element and said second polarizing element;

a first Faraday rotator interposed in said first optical path, which rotates the polarization direction of the light in this optical path by an angle of 45° by use of a magnetic field, the rotating direction being reversed when the travelling direction of the light is reversed;

a first optically active element interposed in said first optical path, which rotates the polarization direction of the light in this optical path by an angle of 45°, the rotating direction not being reversed when the travelling direction of the light is reversed;

a second Faraday rotator with the same properties as the first one interposed in said second optical path; and,

a second optically active element with the same properties as the first one interposed in said second optical path.

Further advantages of the present invention will become apparent from the ensuing description with reference to the accompanying drawings to which, however, the scope of the invention is in no way limited.

Figs. 1A, 1B and 1C are diagrams illustrating a construction of an optical circulator according to the present invention;

Figs. 2A, 2B and 2C are diagrams illustrating a change in construction of the optical circulator of Fig. 1A;

Fig. 3 is a diagram illustrating a polarizing prism which is used for the optical circulator of Fig. 1A;

Fig. 4 is a diagram illustrating the operation of a Faraday rotator which is used for the optical circulator of Fig. 1A;

Fig. 5 is a diagram illustrating the operation of an optically active substance which is used for the optical circulator of Fig. 1A;

Fig. 6 is a diagram illustrating the operation of a mirror which is used for the optical circulator of Fig. 1A;

Figs. 7A, 7B and 7C are diagrams illustrating the operation of the optical circulator of Fig. 1A;

Fig. 8 is a diagram illustrating another embodiment of an optical circulator according to the present invention;

Figs. 9A and 9B are diagrams illustrating a representative example of the optical prism employed in the optical circulator of Fig. 8;

Fig. 10 is a diagram for illustrating the principle of the polarizing prism of Fig. 9A;

Figs. 11A and 11B are diagrams illustrating examples for applying the optical circulator of the present invention; and,

Fig. 12 is a diagram illustrating another example for applying the optical circulator of the present invention.

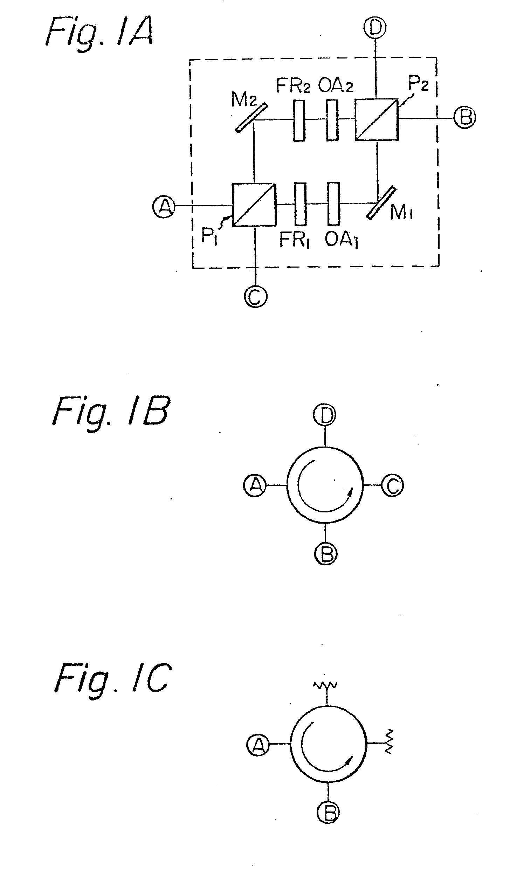

Fig. 1A illustrates an optical circulator according to an embodiment of the present invention. The optical circulator according to the invention consists of: a first polarizing prism $P_1$; a first Faraday rotator $FR_1$ and a first optically active element $OA_1$, which are interposed in a first optical path of light produced from a first outlet port of the first polarizing prism $P_1$; a first mirror $M_1$ for reflecting the light travelling along the first optical path by an angle of 90°; a second mirror $M_2$ interposed in a second optical path of light produced from a second outlet port of the first polarizing prism; a second Faraday rotator $FR_2$ and a second optically active element $OA_2$, which receive the light reflected by the second mirror $M_2$; and, a polarizing prism $P_2$, which receives the light reflected by the first mirror $M_1$, and the light transmitted through the second Faraday rotator $FR_2$ and the second optically active element $OA_2$. A port A is formed on an extension of the first optical path of the first polarizing prism, a port C is formed on an extension of the second optical path of the first polarizing prism, a port D is formed on an extension of the optical path which is reflected by the first mirror and which passes through the second polarizing prism, and a port B is formed on an extension of the optical axis of light which passes through the second optically active element $OA_2$ and the second polarizing prism. The light input from the port A is transmitted to the port B, the light input from the port B is transmitted to the port C, the light input from the port C is transmitted to the port D, and the light input from the port D is transmitted the port A.

Fig. 1B illustrates the relation of inputs and outputs among the four ports of the optical circulator of Fig. 1A, and Fig. 1C illustrates the case when the optical circulator is used as an optical isolator by non-reflectively terminating the ports C and D of the optical circulator. Namely, the light is transmitted from the port A to the port B, but is not transmitted from the port B to the port A.

The foregoing description has dealt with the case in which Faraday rotators $FR_1$ and $FR_2$, optically active elements $OA_1$ and $OA_2$, and mirrors $M_1$ and $M_2$ are arranged between the polarizing prisms $P_1$ and $P_2$ in the order of $Fr_1$—$OA_1$—$M_1$ and $M_2$—$FR_2$—$OA_2$. The order of arrangement, however, is not restricted to the above-mentioned order.

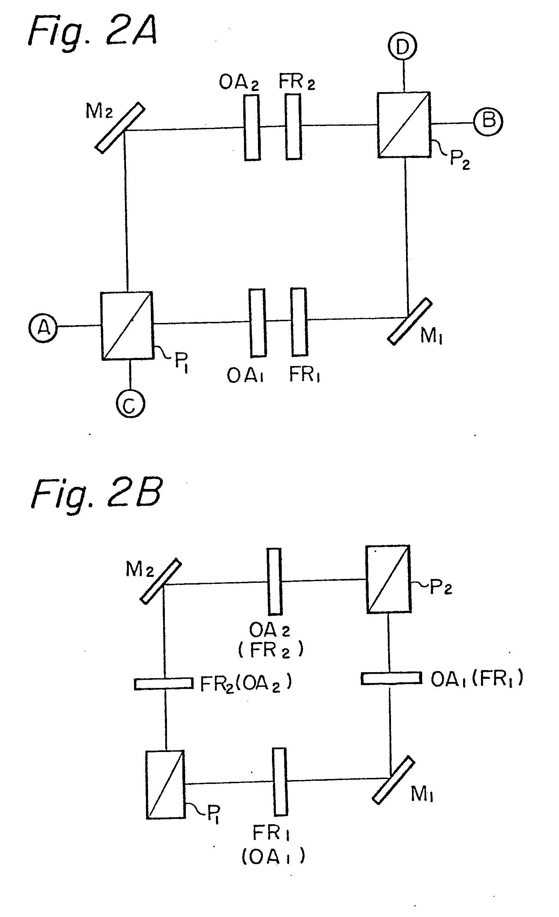

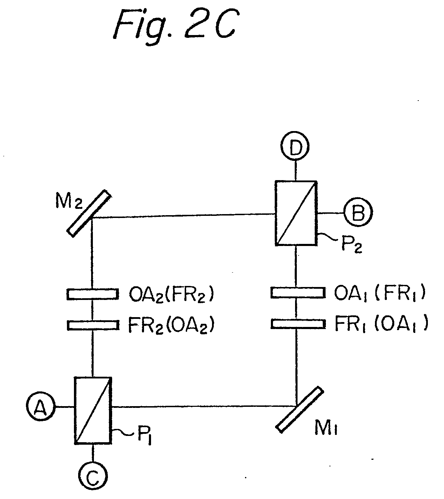

For example, as shown in Figs. 2A, 2B and 2C, the Faraday rotators and the optically active elements may be arranged at the incident side or the emit side of the mirrors, and the order of the Faraday rotator and the optically active element may be changed, and further the Faraday rotator and the optically active element may be arranged separately at the incident side and the emit side of the mirrors.

In Fig. 2A, the order of the Faraday rotator and the optically active element in Fig. 1A are changed, in Fig. 2A, the Faraday rotator and the optically active element are arranged separately, and in Fig. 2C the position of the Faraday rotator and the optically active element are shifted at right angles with respect to the position in Fig. 1A.

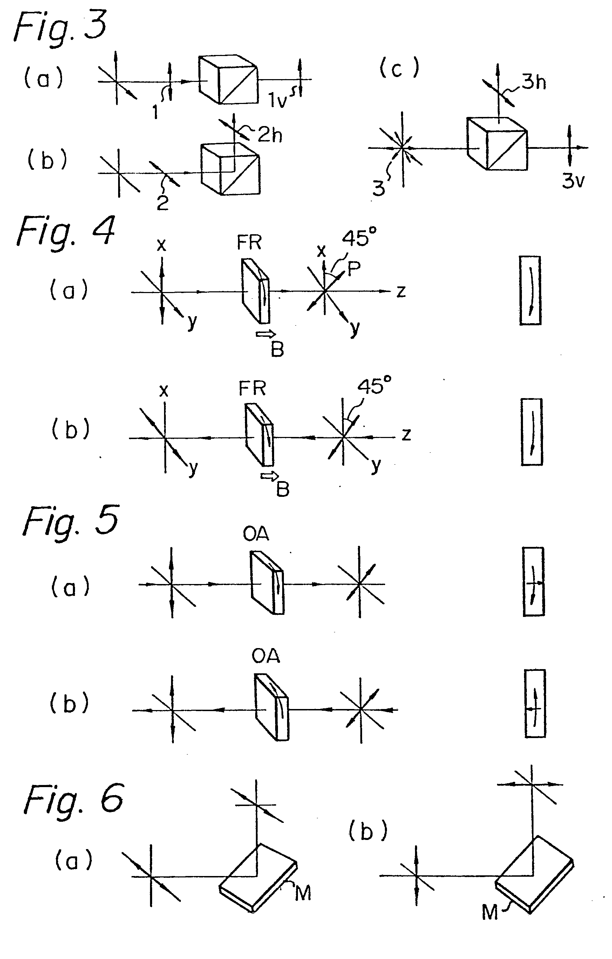

Fig. 3 illustrates the operation of the polarizing prisms $P_1$ and $P_2$. The polarizing prisms produce different outputs depending upon the direction of polarization. When the wave 1 is polarized in a vertical direction, as shown in the diagram (a), the polarizing prism transmits the light in the direction of the axis of incident light; when the wave 2 is polarized in a horizontal direction, as shown in the diagram (b), the polarizing prism transmits the light in a direction at right angles to the axis of incident light; and, when the light 3 is randomly polarized, as shown in the diagram (c), the polarizing prism produces light in the direction of the axis of incident light and in the direction at right angles to the axis of incident light.

Fig. 4 illustrates the operations of the Faraday rotators $FR_1$ and $FR_2$. The Faraday rotator is an element which is composed, for example, of yttrium-iron-garnet $Y_3Fe_5O_{12}$, and turns the polarization direction of incident light by an angle of 45° depending upon the magnetic field. As shown in the diagrams (a) and (b) of Fig. 4, the rotating direction caused by the Faraday rotator changes when the travelling direction z of the light is reversed. Namely, the light which has travelled in a round trip is polarized in a direction at right angles to the initial direction of polarization, as shown in the diagrams (a) and (b) of Fig. 4.

Fig. 5 illustrates the operation of the optically active element. A crystal is usually used as the optically active element. The crystal rotates the direction of polarization. As will be obvious from the diagrams (a) and (b) of Fig. 5, the rotating direction of polarization is not reversed when the travelling direction of the light is reversed. Namely, the light which has travelled in a round trip returns to the initial direction of polarization.

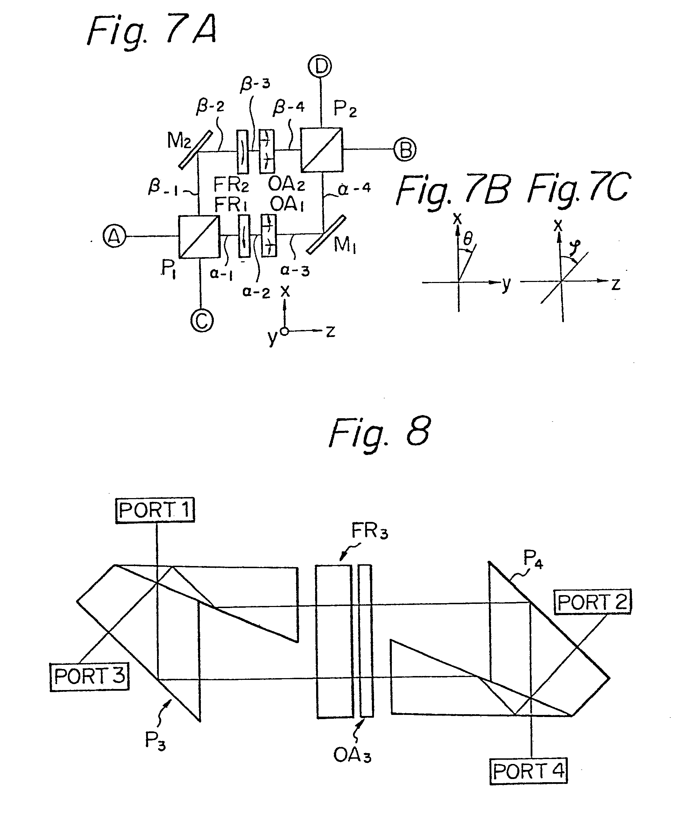

Fig. 6 illustrates the operation of mirrors $M_1$ and $M_2$. Diagrams (a) and (b) of Fig. 6 show total reflection mirrors which are capable of changing the direction of the optical path while maintaining the direction of polarization.

Operation of the optical circulator of the present invention is described below with reference to Figs. 7A, 7B and 7C. For the purpose of convenient illustration in Fig. 7A, the two optical paths are denoted by $\alpha$ and $\beta$, and portions of the optical paths are denoted by 1, 2, 3 and 4. Directions of polarization are denoted by $\theta$ and $\varphi$ as inclinations with respect to the axes x, y and z. In Fig. 7B, symbol $\theta$ denotes an inclination on a plane x—y, and in Fig. 7C, symbol $\varphi$ denotes an inclination on a plane x—z.

(A) First, the light incident through the port A is taken into consideration, and it is presumed that light which has passed through optical fibers and is polarized in a random fashion is received.

With reference to the light incident upon the port A, the component ($\theta = 0°$, $\varphi = 0°$) which is polarized in the direction x is transmitted toward the optical path $\alpha$ by the polarizing prism $P_1$ and the component ($\theta = 90°$, $\varphi = 0°$) which is polarized in the direction y is reflected toward optical path $\beta$. The polarization states at the individual points in each of the optical paths are shown in Table 1a and Table 1b.

### TABLE 1a
#### Component x ($\theta = 0°$, $\varphi = 0°$)

| Points | Polarization State | |
| --- | --- | --- |
| | $\theta$ (°) | $\varphi$ (°) |
| $\alpha$-1 | 0 | 0 |
| $\alpha$-2 | 45 | 0 |
| $\alpha$-3 | 90 | 0 |
| $\alpha$-4 | 90 | 0 |

### TABLE 1b
#### Component y ($\theta = 90°$, $\varphi = 0°$)

| Points | Polarization State | |
| --- | --- | --- |
| | $\theta$ | $\varphi$ |
| $\beta$-1 | 90 | 0 |
| $\beta$-2 | 90 | 0 |
| $\beta$-3 | 135 | 0 |
| $\beta$-4 | 180 (= 0) | 0 |

The light at the point $\alpha$-4 of Table 1a is reflected to the port B via the polarizing prism $P_2$, and the light at the point $\beta$-4 of Table 1b is transmitted to the port B via the polarizing prism $P_2$. Therefore, the light incident through the port A is divided into optical paths $\alpha$ and $\beta$ depending upon the polarized components, synthesized by the polarizing prism $P_2$, and is emitted through the port B.

(B) Similarly, the light introduced through the port B is divided into a component x and a component y by the polarizing prism $P_2$. The polarization states at the individual points in each of the optical paths are shown in Tables 2a and 2b.

### TABLE 2a
#### Component x ($\theta = 0°$, $\varphi = 0°$)

| Points | Polarization State | |
| --- | --- | --- |
| | $\theta$ | $\varphi$ |
| $\beta$-4 | 0 | 0 |
| $\beta$-3 | −45 | 0 |
| $\beta$-2 | 0 | 0 |
| $\beta$-1 | 90 | 90 |

### TABLE 2b
#### Component y ($\theta = 90°$, $\varphi = 0°$)

| Points | Polarization State | |
| --- | --- | --- |
| | $\theta$ | $\varphi$ |
| $\alpha$-4 | 90 | 0 |
| $\alpha$-3 | 90 | 0 |
| $\alpha$-2 | 45 | 0 |
| $\alpha$-1 | 90 | 0 |

The light at point $\beta$-1 of Table 2a is transmitted to the port C through the polarizing prism $P_1$, and the light at point $\alpha$-1 of Table 2b is reflected to the port C through the polarizing prism $P_1$. Therefore, the light introduced through the port B is divided into optical paths $\alpha$ and $\beta$ depending upon the polarized components, synthesized by the polarizing prism $P_1$, and is emitted through the port C.

(C) Similarly, the light introduced through the port C is divided into a component y and a component z by the polarizing prism $P_1$. The polarization states at the individual points in each of the optical paths are shown in Tables 3a and 3b.

### TABLE 3a
#### Component y ($\theta = 90°$, $\varphi = 0°$)

| Points | Polarization State | |
| --- | --- | --- |
| | $\theta$ | $\varphi$ |
| $\alpha$-1 | 90 | 0 |
| $\alpha$-2 | 135 | 0 |
| $\alpha$-3 | 180 (= 0) | 0 |
| $\alpha$-4 | 180 (= 0) | 90 |

### TABLE 3b
#### Component z ($\theta = 0°$, $\varphi = 90°$)

| Points | Polarization State | |
| --- | --- | --- |
| | $\theta$ | $\varphi$ |
| $\beta$-1 | 0 | 90 |
| $\beta$-2 | 0 | 0 |
| $\beta$-3 | 45 | 0 |
| $\beta$-4 | 90 | 0 |

The light at point $\alpha$-4 of Table 3a is transmitted to the port D through the polarizing prism $P_2$, and the light at point $\beta$-4 of Table 3b is reflected to the port D through the polarizing prism $P_2$. Therefore, the light introduced through the port C is divided into optical paths $\alpha$ and $\beta$ depending upon the polarized components, synthesized by the polarizing prism $P_2$, and is emitted to the port D.

(D) Similarly, the light introduced through the port D is divided into a component y and a component z by the polarizing prism $P_2$. The polarized states at the individual points in each of the optical paths are as shown in Tables 4a and 4b.

TABLE 4a
Component y ($\theta = 90°$, $\varphi = 0°$)

|  | Polarization State | |
| --- | --- | --- |
| Points | $\theta$ | $\varphi$ |
| $\beta$-4 | 90 | 0 |
| $\beta$-3 | 45 | 0 |
| $\beta$-2 | 90 | 0 |
| $\beta$-1 | 90 | 0 |

TABLE 4b
Component z ($\theta = 0°$, $\varphi = 90°$)

|  | Polarization State | |
| --- | --- | --- |
| Points | $\theta$ | $\varphi$ |
| $\alpha$-4 | 0 | 90 |
| $\alpha$-3 | 0 | 0 |
| $\alpha$-2 | −45 | 0 |
| $\alpha$-1 | 0 | 0 |

The light at point $\beta$-1 of Table 4a is reflected to the port A via the polarizing prism $P_1$, and the light at point $\alpha$-1 of Table 4b is transmitted to the port A via the polarizing prism $P_1$. Therefore, the light introduced through the port D is divided into optical paths $\alpha$ and $\beta$ depending upon the polarized components, synthesized by the polarizing prism $P_1$, and is emitted to the port A.

According to the present invention, as mentioned above, a circulator having four ports, i.e., A → B, B → C, C → D, D → A, can be constituted. Furthermore, the incident light through each of the ports need not be linearly polarized waves. In other words, the circulator of the invention can be used even for light which has passed through optical fibers in which the polarized state id disturbed.

The circulator according to the present invention can be used as an isolator. For example, if the ports C and D are composed of anti-reflection terminals, the light can be transmitted between the neighbouring two ports, i.e., from the port A to the port B and from the port B to the port A. Further, if the port B is a total reflection terminal and the port D is an anti-reflection terminal, an isolator can be constituted with the ports A and C. Even when the optical circulator is used as an isolator, it is not affected by the state of incident polarization.

When it is desired to use the circulator of the present invention as a three-port circulator, the port D, for instance, should be replaced by a total reflection terminal. Thus, a three-port circulator which has light travelling directions of A → B, B → C, C → D → A can be obtained.

Fig. 8 illustrates an optical circulator according to another embodiment of the present invention. The embodiment of Fig. 8 relates to the optical circulator which is based upon the principle of the optical circulator of Fig. 1A, but which is constructed in a compact size requiring less parts. The circulator of Fig. 8 consists of a YIG ($Y_3Fe_5O_{15}$) crystal which serves as a Faraday rotator $FR_3$, a crystal plate $OA_3$ used as a half-wave plate, and two polarizing prisms $P_3$ and $P_4$. The incident light beam is divided into two parallel beams by the polarizing prims $P_3$. The parallel beams have polarization planes that are at right angles to each other. The two parallel beams pass through the Faraday rotator $FR_3$ and the half-wave plate $OA_3$, and are emitted through the polarizing prism $P_4$. Each component is coated with an anti-reflection coating.

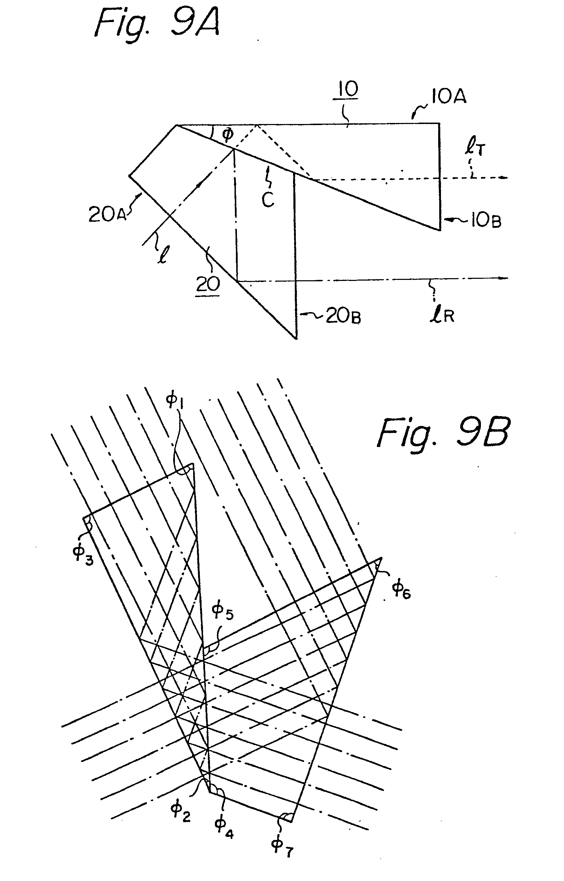

The polarizing prisms $P_3$ and $P_4$ are described below in detail with reference to Figs. 9A and 9B.

In Fig. 9A, reference numerals 10 and 20 denote a prism in the shape of a triangle pole and a prism of the shape of a square pole, which are composed of titanium dioxide. The optical axes of these prisms 10 and 20 are perpendicular to the surface of the paper. Symbol C denotes a portion in which the prisms 10 and 20 are facing each other. An air layer of a thickness as small as, for example, about 10 microns is present in the portion C. Reference numerals 10A and 10B denote a plane of the prism 10 for introducing and emitting the light, and a plane for totally reflecting the light, and reference numerals 20A and 20B denote a plane of the prism 20 for introducing and emitting the light, and a plane for totally reflecting the light.

The polarizing prism has a shape as described below. First, with the plane C as a reference, the plane 10A is so formed as to cross the plane C maintaining a Brewster's angle $\phi$ which is determined by an ordinary ray heading from the interior of the prism toward the external side, and the plane 20A is also so formed as to cross the plane C maintaining the same angle $\phi$. In this case, the titanium dioxide exhibits a refractive index $n_o$ of 2.46 by an ordinary ray (light beam by which an optical axis and a polarization plane cross at right angles) of a wavelength of 1.3 microns, and exhibits a refractive index

$n_e$ of 2.72 by an extraordinary ray (light beam by which an optical axis are a polarization plane are in parallel) of a wavelength of 1.3 microns. From the refractive index $n_0$ by the ordinary ray, the Brewster's angle $\phi$ can be found according to the following relation.

$$\phi = \text{arccot } n_o \fallingdotseq 22.1°$$

The reason the planes 10A and 20A include the above-mentioned angle $\phi$ is because, when the non-polarized light (natural light, or linearly polarized light having a polarization plane which is tilted, or elliptically polarized light) containing both the ordinary ray components and the extraordinary ray components is incident upon and perpendicular to the planes 10A and 20A and is allowed to reach the plane C along a single path, the incident angle with respect to the plane C defines the Brewster's angle.

On the other hand the planes 10B and 20B are in parallel with each other and they meet at right angles with light rays $I_T$, $I_R$, which are emitted from the interior of the prism to the exterior. In the case of Fig. 9A, the planes 10B and 20B are so defined as to have an angle $3\phi = 66.3°$ with the plane C.

With the above-mentioned construction, a non-polarized light I which falls on the prism 20 perpendicularly to the plane 20A (the same holds true even with the plane 10A) is allowed to be incident upon the plane C at the Brewster's angle. Therefore, the ordinary ray $I_T$ contained in the non-polarized light ray I completely passes through the plane C. However, the extraordinary ray $I_R$ which satisfies the requirement of total reflection, i.e., $n_e \sin \fallingdotseq 1.02 > 1$, contained in the non-polarized ray I, is completely reflected.

In effect, light components are completely polarized and separated from the natural light I. In the case of a prism composed of calcite, part of the polarized light that should have been reflected is permitted to pass through. The prism composed of titanium dioxide, however, does not present such an inconvenience.

If there is any substance which satisfies the requirements set forth below, it may be used in place of the titanium dioxide. Namely, the following relations should be satisfied with regard to the refractive index $n_o$ by ordinary ray, refractive index $n_e$ by extraordinary ray, and the Brewster's angle $\phi$ by ordinary ray.

$$n_e \sin \phi > 1 \qquad (1)$$

$$\cot \phi = n_o \qquad (2)$$

From (1), $\qquad n_e^2 > \text{cosec}^2 \phi \qquad (1)'$

From (2), $\qquad n_o^2 = \cot^2 \phi \qquad (2)'$

From $(1)' - (2)'$, $\qquad n_e^2 - n_o^2 > 1 \qquad (3)$

From the above mentioned relations, it will be recognized that the difference in the squared indices of double refraction must be greater than 1.

In the case of titanium dioxide, the difference will be $n_e^2 - n_o^2 \fallingdotseq 1.35$ at a wavelength of 1.3 microns.

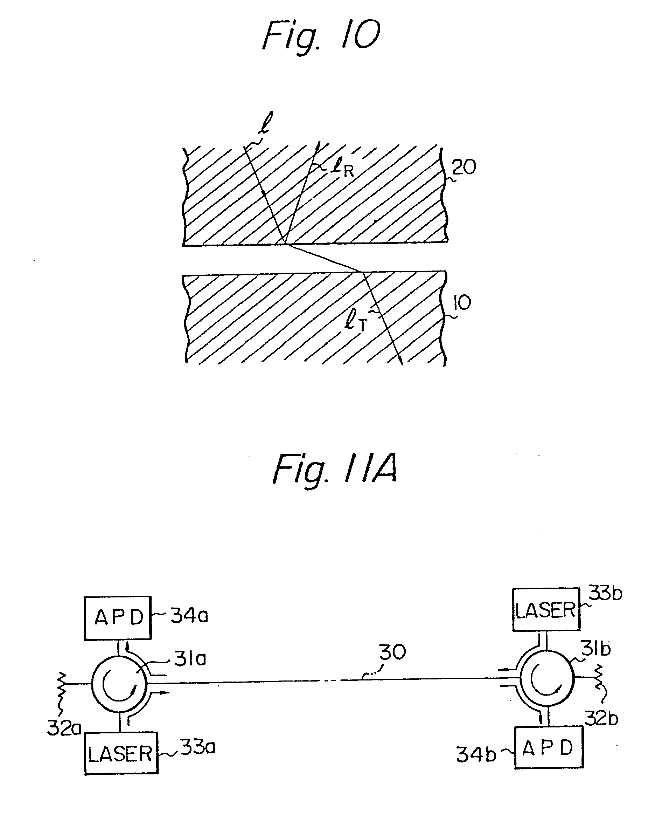

The thus polarized ordinary ray $I_T$ then proceeds into another prism 10 through a thin gap present in the plane C, and is eventually oriented in the same direction as the incident light I. More in detail, the ray is refracted and polarized one through a boundary between the prism 20 and thin gap, as shown in Fig. 10, and is refracted and polarized again through a boundary between thin gap and the prism 10. The Brewster's angle is maintained even by the second refraction. Polarization by the second refraction causes the direction of the light ray to bend in the opposite direction. Consequently, the incident light I and the ordinary ray $I_T$ proceed in parallel. When the thickness of the thin gap is denoted by t, the distance x between the two rays is given by $x = t \cdot \sin(90° - 20)/\sin \phi$ (wherein $\phi$ represents the Brewster' angle 22.1°). Therefore, when $t = 10$ microns, x is 19 microns, which in practice is negligibly small.

Referring again to Fig. 9A, the thus separated ordinary ray $I_T$ and extraordinary ray $I_R$, which proceed through the prisms 10 and 20, are totally reflected in each of the prisms. The direction of the ordinary ray $I_T$ reflected by the plane 10A and the plane C, is in parallel with the direction of the extraordinary ray $I_R$ which is reflected by the plane 20A. This can be easily understood if it is considered that the ordinary ray $I_T$ and the extraordinary ray $I_R$ are separated toward directions which are symmetrical with respect to a line (symmetrical with respect to the plane C), and are totally reflected by the planes 10A and 20A which are arrayed defining symmetrical angles.

In other words, the ordinary ray $I_T$ and the extraordinary ray $I_R$ which are reflected the same number of times (one time each) are so oriented as to define symmetrical angles with respect to the plane C. Furthermore, the ordinary ray $I_T$ is oriented by the second reflection so as to have an angle symmetrical with respect to the plane C. Consequently, the extraordinary ray $I_R$ which is reflected once and the ordinary ray $I_T$ which is reflected twice become parallel with each other. The ordinary ray $I_T$ and

the extraordinary ray $I_R$ which are in parallel are allowed to perpendicularly pass through the planes 10B and 20B, and are emitted to the exterior of the prisms 10 and 20.

Thus, the polarizing prism illustrated in Fig. 9A permits the ordinary ray $I_T$ and the extraordinary ray $I_R$ to be emitted in parallel. By using the thus constructed polarizing prism, therefore, it is possible to provide an optical circulator which is constructed in a compact size requiring less parts.

For easy understanding of the prism which is constructed in a compact size, Fig. 9B illustrates paths of rays in the prism as well as widths of the paths. Angles in the prism are:

$$\phi_1 = 66.29° \qquad \phi_2 = 22.10° \qquad \phi_3 = 91.61°$$
$$\phi_4 = 112.10° \qquad \phi_5 = 113.71° \qquad \phi_6 = 44.19°$$
$$\phi_7 = 90°$$

As is clear from Fig. 9B the space in the prism is effectively used with respect to the width of light flux. It will further be recognized that the two parallel light rays can be brought close to each other. For example, a crystal $FR_3$ grown by the flux method is polished so as to provide 45° Faraday rotation at a wavelength of 1.3 microns. The thickness of the YIG crystal $FR_3$ is about 2.1 mm. Transmissivity of the antireflection coated crystal is about 90% at 1.3 microns. In order to saturate magnetically the YIG crystal $FR_3$, a magnetic field is applied by a ring shaped samarium-cobalt (Sm-Co) magnet. The half-wave plate $OA_3$ is used to obtain 45° polarization rotation. The principal axis of the quartz plate is arranged at 22.5° to the incident polarization. The transmissivity of the half-wave plate is over 99%.

The light travelling to the right undergoes 45° rotation by the YIG crystal and −45° rotation by the quartz plate, cancelling polarization rotation. The travelling light to the left, on the other hand, undergoes 90° rotation by the YIG crystal and the quartz plate. The size of the optical circulator shown in Fig. 8 is about 1.7 cm × 1.5 cm × 1.5 cm, and this size is determined mainly by the magnet. For convenience in actual use, each port is arranged in a flat configuration with ample space to attach a lens or a fiber connector.

One example of measured transmission loss (dB) of the circulator is summarized in Table 5.

TABLE 5

| In | Out | | | |
|---|---|---|---|---|
| | 1 | 2 | 3 | 4 |
| 1 | — | 1.1 | 18 | 22 |
| 2 | 17 | — | 0.9 | 17 |
| 3 | 23 | 18 | — | 1.1 |
| 4 | 0.9 | 16 | 17 | — |

A few examples for applying the circulator of the present invention are mentioned below.

Figs. 11A and 11B illustrate the cases in which the circulator of the present invention is employed for bilateral communication systems of the same wavelengths. In these cases, the functions of the existing fibers can be doubled. Fig. 11A shows the case in which the light is transmitted between the transmitting end and the receiving end through a fiber 30, and in which reference numerals 31a and 31b denote circulators according to the present invention, and 32a and 32b denote anti-reflection terminals. Optical information from a laser 33a travels through optical circulator 31a, fiber 30 and optical circulator 31b, and is received by an avalanche photodiode 34b. Optical information from a laser 33b travels through optical circulator 31b, fiber 30, and optical circulator 31a, and is received by an avalanche photodiode 34a. Fig. 11B shows the case when the optical circulators are used as bilateral repeaters. The light transmitted from the left toward the right, passes through the optical circulator 31a, the fiber 30, enters into the optical circulator 31b, is amplified by the avalanche photodiode 36b, the amplifier 37b and the laser diode 35b, and is emitted through another port of the optical circulator 31b. The light transmitted from the right toward the left, passes through the optical circulator 31b, the fibre 30, enters into the optical circulator 31a, is amplified by the avalanche diode 36a, amplifier 37a and laser diode 35a, and is emitted through another port of the optical circulator 31a.

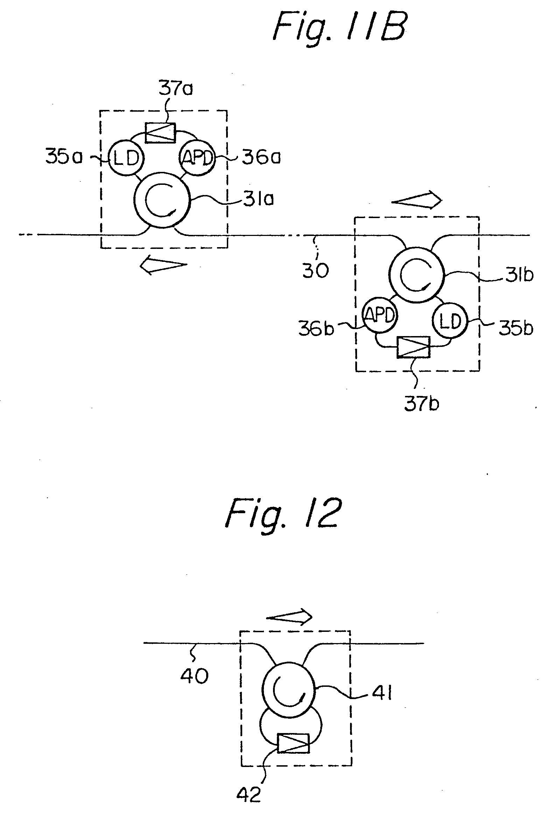

Fig. 12 illustrates the case in which the circulator of the present invention is used for a unilateral optical amplification system, in order to give directivity to an optical amplifier which is based upon a semiconductor laser or the like. Namely, the light transmitted from the left toward the right passes through an optical circulator 41, whereby an optical amplifier 42 exhibits a gain. The light travelling in the reverse direction, passes through the circulator 41 while presenting insertion losses.

As illustrated in detail in the foregoing, the present invention provides an optical circulator which

7

is not affected by the polarization state of the incident light, and which gives distinguished effects when it is applied to communication systems using optical fibers.

## Claims

1. An optical circulator comprising:

a first polarizing element and a second polarizing element having different outlet ports for outgoing linearly polarized lightbeams with polarization directions perpendicular to each other;

a first mirror and a second mirror which form a first optical path and a second optical path between said first polarizing element and said second polarizing element;

a first Faraday rotator interposed in said first optical path, which rotates the polarization direction of the light in this optical path by an angle of 45° by use of a magnetic field, the rotating direction being reversed when the travelling direction of the light is reversed;

a first optically active element interposed in said first optical path, which rotates the polarization direction of the light in this optical path by an angle of 45°, the rotating direction not being reversed when the travelling direction of the light is reversed;

a second Faraday rotator with the same properties as the first one interposed in said second optical path; and,

a second optically active element with the same properties as the first one interposed in said second optical path.

2. An optical circulator according to claim 1, wherein said optically active elements are half-wave plates.

3. An optical circulator comprising:

a pair of polarizing prisms, each being formed by two prisms;

said two prisms being formed by a uniaxial crystalline material for which the difference in the squared indices of double refraction is greater than 1, said two prisms having a facing surface parallel to their optical axis, Brewster's angles formed between an introducing surface of the light and said facing surface, and an emitting surface formed at right angles with respect to an emitted light beam so that two parallel light beams along a first optical path and a second optical path with polarization directions perpendicular to each other are obtained between said polarizing prisms;

Faraday rotators interposed in said first and second optical paths, which rotate the polarization direction of the light beam in the said optical path by an angle of 45° by use of a magnetic field, the rotating direction being reversed when the travelling direction of the light beam which passes therethrough is reversed; and,

polarization direction rotators interposed in said first and second optical paths, which rotate the polarization direction of the light beam in the said optical path by an angle of 45°, the rotating direction not being reversed when the travelling direction of the light beam which passes therethrough is reversed.

## Patentansprüche

1. Optischer Zirkulator, gekennzeichnet durch

ein erstes und ein zweites optisches Polarisationselement, welche verschiedene Austrittsöffnungen für austretende, linear polarisierte Lichtstrahlen aufweisen, deren Polarisationsrichtungen zueinander senkrecht sind,

einen ersten und einem zweiten Spiegel, welche einen ersten optischen Weg und einen zweiten optischen Weg zwischen dem ersten Polarisationselement und dem zweiten Polarisationselement bilden,

einen in dem ersten Weg angeordneten Faraday-schen Rotor, welcher die Polarisationsrichtung des Lichtes auf diesem optischen Weg unter Verwendung eines Magnetfeldes um einen Winkel von 45° dreht, wobei die Drehrichtung bei Umkehrung des Ausbreitungsrichtung des Lichtes umgekehrt wird,

ein in dem ersten optischen Weg angeordnetes optisch aktives Element, welches die Polarisationsrichtung des Lichtes auf diesem optischen Weg um einen Winkel von 45° dreht, wobei die Drehrichtung bei Umkehrung der Ausbreitungsrichtung des Lichtes nicht umgekehrt wird,

einen zweiten Faraday-schen Rotor, welcher die gleichen Eigenschaften wie der erste hat und in dem zweiten optischen Weg angeordnet ist,

und durch ein zweites optisch aktives Element, welches in dem zweiten optischen Weg angeordnet ist und die gleichen Eigenschaften wie das erste optisch aktive Element hat.

2. Optischer Zirkulator nach Anspruch 1, dadurch gekennzeichnet, daß die optisch aktiven Elemente Halbwellen-Platten sind.

3. Optischer Zirkulator, gekennzeichnet durch

ein Paar von Polarisationsprismen, welche jeweils aus zwei Prismen geformt sind, bei welchem die beiden Prismen aus einem einachsigen kristallinen Material gebildet sind, für welches der Unterschied der quadratischen Indizes der Doppelbrechung größer als 1 ist, die beiden Prismen benachbarte

# 0 015 129

Oberflächen parallel zu ihrer optischen Achse aufweisen, die Brewster-schen Winkel zwischen einer Eintrittsoberfläche des Lichtes und der benachbarten Oberfläche gebildet werden und eine Austrittsoberfläche rechtwinklig zu einem austretenden Lichtstrahl so gebildet wird, daß zwei parallele Lichtstrahlen längs einem ersten optischen Weg und längs einem zweiten optischen Weg mit zueinander senkrechten Polarisationsrichtungen zwischen den Polarisationsprismen erhalten werden,

durch Faraday-sche Rotoren, welche in dem ersten optischen Weg und in dem zweiten optischen Weg angeordnet sind und die Polarisationsrichtung des Lichtstrahls in dem optischen Weg unter Verwendung eines Magnetfeldes um 45° drehen, wobei die Drehrichtung umgekehrt wird, wenn die Ausbreitungsrichtung des hindurchtretenden Lichtstrahls umgekehrt wird, und

durch Polarisationsrichtungs-Rotoren, welche in dem ersten und zweiten optischen Weg angeordnet sind und die Polarisationsrichtung des Lichtstrahls in dem optischen Weg um einen Winkel von 45° drehen, wobei die Drehrichtung bei Umkehrung der Ausbreitungsrichtung des hindurchtretenden Lichtes nicht umgekehrt wird.

## Revendications

1. Circulateur optique comprenant:

un premier élément de polarisation et un deuxième élément de polarisation possédant des orifices de sortie différents servant à délivrer des faisceaux lumineux linéairement polarisés ayant des directions de polarisation mutuellement perpendiculaires;

un premier miroir et un deuxième miroir qui forment un premier trajet optique et un deuxième trajet optique entre ledit premier élément polarisant et ledit deuxième élément polarisant;

un premier rotateur de Faraday placé dans ledit premier trajet optique, qui fait tourner la direction de polarisation de la lumière se trouvant sur ce trajet optique d'un angle de 45° au moyen d'un champ magnétique, la direction de rotation étant inversée lorsque la direction de passage de la lumière est inversée;

un premier élément optiquement actif placé dans ledit premier trajet optique, qui fait tourner la direction de polarisation de la lumière se trouvant sur ce trajet optique d'un angle de 45°, le sens de rotation n'étant pas inversé lorsque le sens de passage de la lumière est inversé;

un deuxième rotateur de Faraday ayant les mêmes propriétés que le premier et placé dans ledit deuxième trajet optique; et

un deuxième élément optiquement actif ayant les mêmes propriétés que le premier et placé dans ledit deuxième trajet optique.

2. Circulateur optique selon la revendication 1, où lesdits éléments optiquement actifs sont des plaques demi-onde.

3. Circulateur optique comprenant:

une paire de prismes de polarisation, chacun étant formé de deux prismes;

lesdits deux prismes étant formés par un matériau cristallin uniaxe pour lequel la différence des carrés des indices de double réfraction est supérieure à 1, lesdits deux prismes ayant une surface en regard qui est parallèle à leur axe optique, des angles de Brewster formés entre une surface d'introduction de la lumière et ladite surface en regard, et une surface d'émission formée perpendiculairement à un faisceau lumineux émis de façon que deux faisceaux lumineux parallèles situés le long d'un premier trajet optique et d'un deuxième trajet optique avec des directions de polarisation perpendiculaires entre elles sont obtenus entre lesdits prismes de polarisation;

des rotateurs de Faraday placés dans lesdits premier et deuxième trajets optiques, qui font tourner la direction de polarisation de faisceau lumineux situé dans ledit trajet optique d'un angle de 45° au moyen d'un champ magnétique, le sens de rotation étant inversé lorsque le sens de passage du faisceau lumineux qui les traverse est inversé; et

des rotateurs de direction de polarisation placés dans lesdits premier et deuxième trajets optiques, qui font tourner la direction de polarisation du faisceau lumineux se trouvant dans ledit trajet optique d'un angle de 45°, le sens de rotation n'étant pas inversé lorsque le sens de passage du faisceau lumineux qui les traverse est inversé.

9

Fig. IA

Fig. IB

Fig. IC

1

*Fig. 2A*

*Fig. 2B*

# Fig. 2C

*Fig. 3*

(a)

(b)

(c)

*Fig. 4*

(a)

(b)

*Fig. 5*

(a)

(b)

*Fig. 6*

(a)

(b)

## Fig. 7A

## Fig. 7B Fig. 7C

## Fig. 8

# *Fig. 9A*

# *Fig. 9B*

## Fig. 10

## Fig. 11A

## Fig. 11B

## Fig. 12